# EUROPEAN PATENT APPLICATION

(11) **EP 0 967 139 A2**
(43) Date of publication of application: **29.12.1999**
(21) Application number: 99650052.6
(22) Date of filing: 22.06.1999
(51) Int. Cl.: B62D 53/06

(54) **A trailer**

(30) Priority: 22.06.1998 IE 980498
(71) Applicant: Dennison, Robert, Nase, County of Kildare (IE)
(72) Inventor: Dennison, Robert, Nase, County of Kildare (IE)
(74) Representative: Schütte, Gearoid

(57) **Abstract**

A semi-trailer (1) has a chassis (2) with a pair of spaced-apart longitudinal chassis beams (3, 4) extending between a front end and a rear end of the chassis (2). A rubbing plate and king pin assembly (5) is mounted between the longitudinal beams (3, 4) at a front end of the chassis (2). A number of wheel axle assemblies (6) are mounted at a rear end of the chassis (2). A forward transverse beam (2) of the chassis (2) in addition to being a chassis member is elongated and forms a forward bolster for supporting a container and has twistlock assemblies (11) at outer ends. The longitudinal beams (3, 4) pass through the outer ends of the forward transverse beam (10). Thus, the chassis (2) in plan has bow-shaped longitudinal beams (3, 4) at a front end of the chassis (2). This construction allows the weight of the chassis (2) to be reduced.

## Description

This invention relates to trailers, and in particular to semi-trailers.

Semi-trailers are widely used for carrying containers and generally comprise a wheeled chassis which is attached at it's front end to a tractor vehicle by a fifth wheel coupling. The chassis typically comprises a pair of substantially parallel longitudinal beams with a number of spaced-apart transverse beams extending therebetween. The longitudinal beams typically have centres which are about 1,200mm apart. Front and rear bolster assemblies are mounted on the chassis to support a container box, for example, on the chassis. These bolster assemblies project outwardly at each side of the chassis in cantilevered fashion and thus require significant reinforcement to support a container and transfer loading from the container to the chassis without failure. Significant reinforcement is also required at a front end of the chassis to support the rubbing plate assembly of the fifth wheel coupling. This necessary reinforcement adds significantly to the weight of the chassis and therefore limits the load carrying capacity of the trailer.

It is an object of the present invention to provide a lightweight trailer of optimum loading carrying capacity.

The invention in essence uses a forward transverse beam to form the forward bolster, the forward transverse beam being elongated and having twist locks mounted at outer ends of the forward transverse beam and the longitudinal members being bent outwardly around the outer ends of the beam. Thus, advantageously, large weight savings can be made as the separate forward bolster assembly is discarded.

Also, by tapering the longitudinal beams inwardly from the forward transverse beam to each side of a rubbing plate assembly, significant weight savings can be made in the rubbing plate assembly.

In one embodiment of the invention, there is provided a trailer having a wheeled chassis, the chassis comprising a pair of spaced-apart longitudinal chassis beams interconnected by a plurality of spaced-apart transverse beams, a rubbing plate and king pin assembly being mounted between the longitudinal beams at a front end of the chassis, one or more wheel axle assemblies being mounted at a rear end of the chassis, the chassis having a pair of container carrying bolsters, namely, a front bolster and a rear bolster, each bolster having attachment means to releasably secure a container or the like thereon, characterised in that a forward transverse beam of the chassis forms the front bolster with container attachment means at each end of the forward transverse beam and the longitudinal chassis beams pass through the outer ends of the forward transverse beam.

In a particularly preferred embodiment, the longitudinal beams taper outwardly and rearwardly from each side of the rubbing plate assembly to the ends of the forward transverse beam and taper inwardly from a rear of the forward transverse beam to a rear chassis portion in which the longitudinal beams are substantially parallel.

In another embodiment container attachment means is integrally formed with the forward transverse beam at each end of the forward transverse beam.

In a further embodiment the forward transverse beam is of box-section construction.

In another embodiment the longitudinal beams are of I-section comprising a horizontal top flange and a horizontal bottom flange interconnected by an upright web, a front end of each flange being tapered.

In a further embodiment, the forward transverse beam extends between the webs on the longitudinal members.

In another embodiment one or more diagonal braces are mounted between the longitudinal beams and between spaced-apart transverse beams on the chassis.

Preferably side guards are mounted at each side of the chassis, each side guard extending rearwardly from a position below an outer end of the forward transverse beam.

In another embodiment the trailer is a goose-neck trailer.

The invention will be more clearly understood by the following description of an embodiment thereof, given by way of example only, with reference to the accompanying drawings, in which:-
Fig. 1 is an elevational view of a trailer according to the invention;
Fig. 2 is a plan view of the trailer;
Fig. 3 is a detail elevational view of portion of the trailer;
Fig. 4 is a detail plan view of a rear end of the trailer;
Fig. 5 is a detail sectional view taken along the line V-V of Fig. 4;
Fig. 6 an elevational view of another trailer;
Fig. 7 is a plan view of the trailer shown in Fig. 6; and
Fig. 8 is a detail exploded view showing portion of a longitudinal beam of a chassis of the trailer.

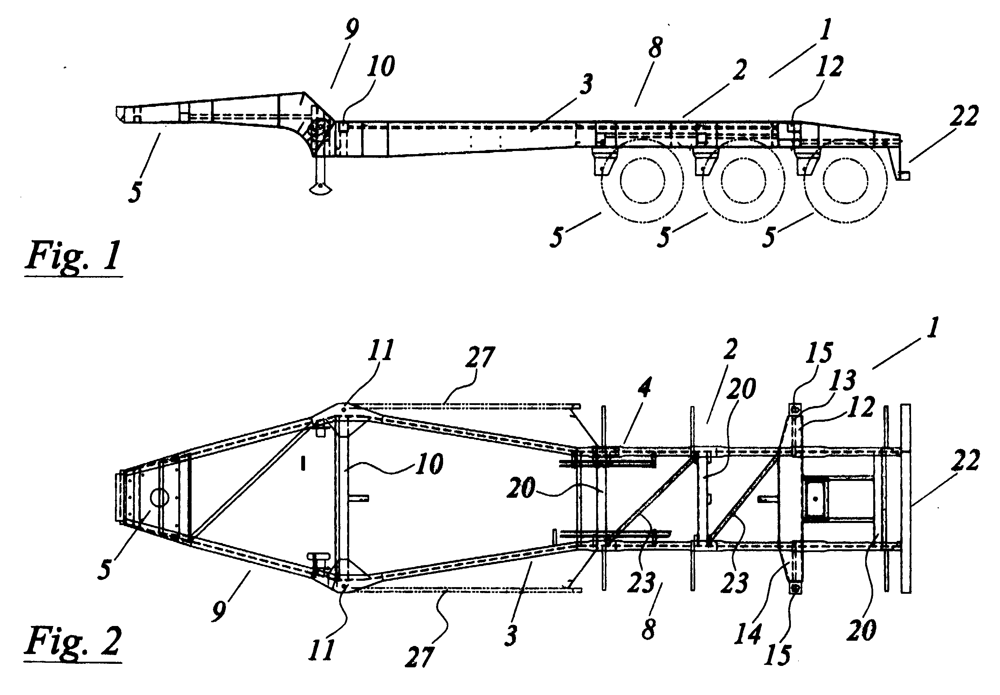

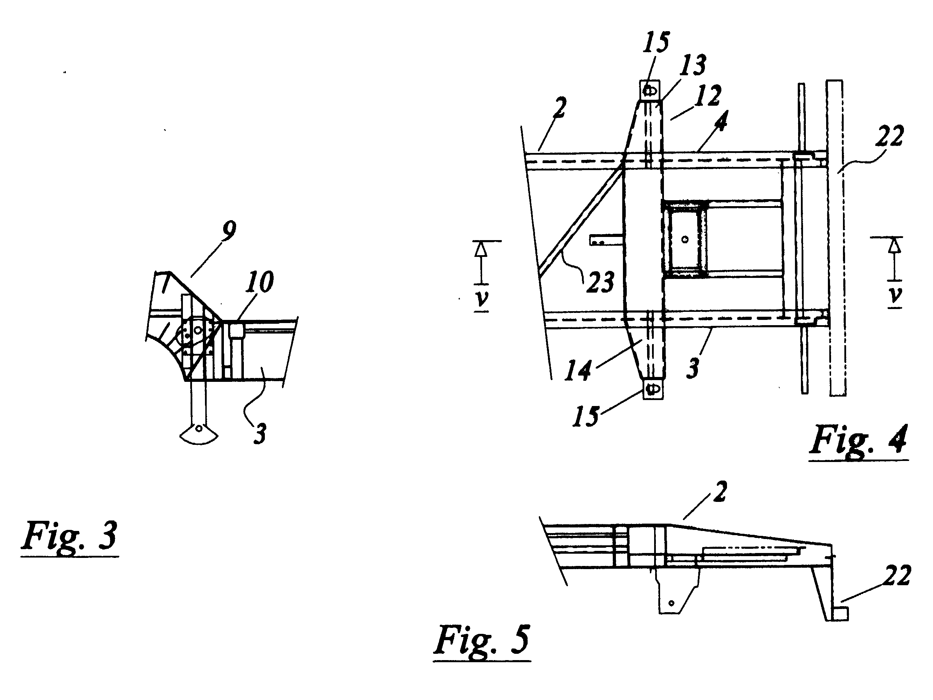

Referring to the drawings and initially to Figs. 1 to 5 thereof, there is illustrated a trailer according to the invention, indicated generally by the reference numeral 1. The trailer 1 has a chassis 2 with a pair of spaced-apart longitudinal chassis beams 3, 4 extending between a front end and a rear end of the chassis 2. A rubbing plate and king pin assembly 5 is mounted between the longitudinal beams 3, 4 at a front end of the chassis 2. A number of wheel axle assemblies 6 are mounted at a rear end of the chassis 2.

Referring to Fig. 2, the chassis 2 has a rear portion 8 in which the longitudinal beams 3, 4 are substantially parallel, and a front portion 9 in which, in plan, the longitudinal chassis members 3, 4 have a bow shape to extend around outer ends of a forward transverse beam 10. The forward transverse beam 10 is of box-section construction. This forward transverse beam 10 in addition to being a chassis member essentially forms a forward bolster for supporting a container and has twist locks 11 integrally formed with outer ends of the forward transverse beam 10. An associated rear bolster 12 is of the more conventional cantilevered construction having wings 13, 14 which project outwardly at each side of the chassis 2 to carry twist locks 15.

It will be noted that the longitudinal beams 3, 4 taper inwardly and rearwardly from the forward transverse beam 10 to the rear chassis portion 8. Also, the longitudinal beams 3, 4 taper inwardly forwardly of the transverse beam 10 to engage each side of the rubbing plate assembly 5. Because of this tapered construction, the rubbing plate assembly 5 can be mounted directly on the longitudinal beams 3, 4 without the need for an additional mounting plate and reinforcement as is used in conventional constructions of trailer chassis in which the longitudinal beams are substantially parallel along their entire length.

In the rear chassis portion 8, a number of spaced-apart rear transverse beams 20 extend between the longitudinal beams 3, 4. A crash bar 22 is mounted at a rear end of the chassis 2. A number of diagonal braces 23 extend between the longitudinal beams 3, 4 and between the rear transverse beams 20.

The front chassis portion 9 also includes a diagonal brace 25. Side guards 27 are also provided.

It will be appreciated that the trailer construction of the present invention is particularly advantageous in reducing the weight of the trailer and therefore increasing the load carrying capacity of a container transported thereon. The extension of the forward transverse beam outwardly and the provision of twist locks at each end of the forward transverse beam so that it forms the forward bolster assembly gives a large weight saving as the bulky and robust conventional bolster assembly can be discarded. Further, a weight saving is also made at a front end of the chassis 2 in the mounting of the rubbing plate assembly in which, because of the tapered construction of the front end, the rubbing plate assembly can be supported directly on the longitudinal beams rather than being hung between the longitudinal beams on a support frame as is the case in conventional chassis constructions.

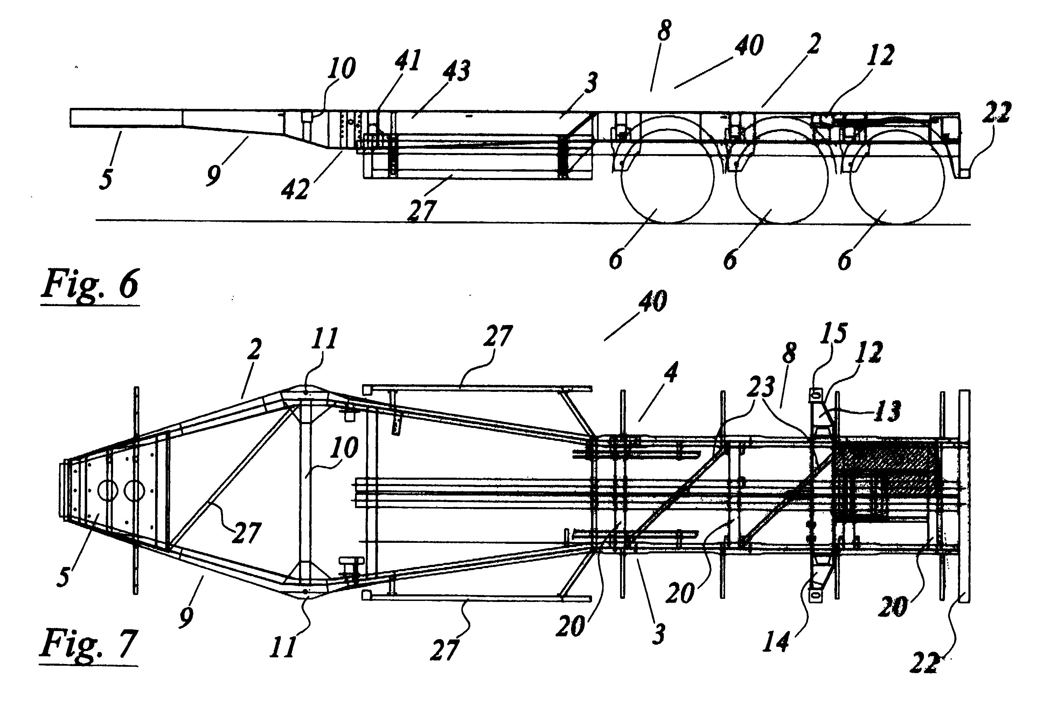

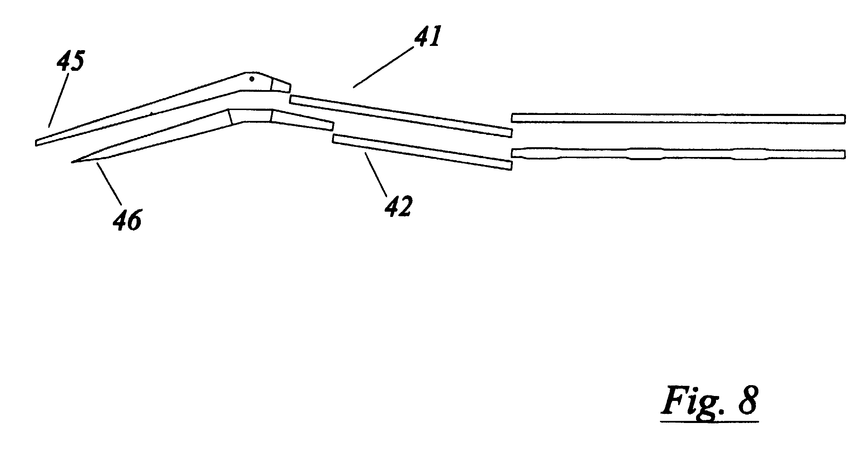

Referring now to Figs. 6 to 8 there is illustrated another trailer indicated generally by the reference numeral 40, parts similar to those described previously are assigned the same reference numerals. It will be noted that in this case the top of the trailer 40 is of flat construction rather than the goose-neck construction shown in the trailer previously described. In this case also the rubbing plate and king pin assembly 5 has twin king pin mounting positions to allow adjustment of the king pin location on the chassis 2. As with the previous construction of trailer each longitudinal beam 3, 4 is of I-section construction comprising a top flange 41, a bottom flange 42 interconnected by an upright web 43. The fabrication of the flanges 41, 42 is shown in Fig. 8. It will be noted that front ends 45, 46 of the top flange 41 and bottom flange 42, respectively, are tapered as shown in the drawing.

The invention is not limited to the embodiments hereinbefore described which may be varied in both construction and detail within the scope of the appended claims.

## Claims

1. A trailer (1) having a wheeled chassis (2), the chassis (2) comprising a pair of spaced-apart longitudinal chassis beams (3, 4) interconnected by a plurality of spaced-apart transverse beams (10, 20), a rubbing plate and king pin assembly (5) being mounted between the longitudinal beams (3, 4) at a front end of the chassis (2), one or more wheel axle assemblies (6) being mounted at a rear end of the chassis (2), the chassis (2) having a pair of container carrying bolsters (12), namely, a front bolster and a rear bolster, each bolster having attachment means to releasably secure a container or the like thereon, characterised in that a forward transverse beam (10) of the chassis (2) forms the front bolster with container attachment means (11) at each end of the forward transverse beam (10) and the longitudinal chassis beams (3, 4) pass through the outer ends of the forward transverse beam (10).

2. A trailer (1) as claimed in claim 1, wherein the longitudinal beams (3, 4) taper outwardly and rearwardly from each side of the rubbing plate assembly (5) to the ends of the forward transverse beam (10) and taper inwardly from a rear of the forward transverse beam (10) to a rear chassis portion (8) in which the longitudinal beams (3, 4) are substantially parallel.

3. A trailer (1) as claimed in claim 1 or claim 2, wherein container attachment means (11) is integrally formed with the forward transverse beam (10) at each end of the forward transverse beam.

4. A trailer (1) as claimed in any preceding claim, wherein the container attachment means (11) is a twistlock assembly.

5. A trailer (1) as claimed in any preceding claim, wherein the forward transverse beam (10) is of box-section construction.

6. A trailer (1) as claimed in any preceding claim, wherein the longitudinal beams (3, 4) are of I-section comprising a horizontal top flange (41) and a horizontal bottom flange (42) interconnected by an upright web (43), a front end (45, 46) of each flange (41, 42) being tapered.

7. A trailer (1) as claimed in claim 6, wherein the forward transverse beam (10) extends between the webs (43) on the longitudinal members (3, 4).

8. A trailer (1) as claimed in any preceding claim, wherein one or more diagonal braces (23, 25) are mounted between the longitudinal beams (3, 4) and between spaced-apart transverse beams (10, 20) on the chassis (2).

9. A trailer (1) as claimed in claim 1 or claim 2, wherein side guards (27) are mounted at each side of the chassis (2), each side guard (27) extending rearwardly from a position below an outer end of the forward transverse beam (10).

10. A trailer (1) as claimed in any preceding claim, wherein the trailer is a gooseneck trailer.
